# EUROPÄISCHE PATENTSCHRIFT

(11) **EP 0 847 353 B1**
(45) Veröffentlichungstag und Bekanntmachung des Hinweises auf die Patenterteilung: **29.11.2000**
(21) Anmeldenummer: 96917480.4
(22) Anmeldetag: 31.05.1996
(51) Int. Cl.: B60T 13/72, B60T 13/57

(54) **PNEUMATISCHER BREMSKRAFTVERSTÄRKER**
PNEUMATIC SERVOBRAKE
SERVOFREIN PNEUMATIQUE

(30) Priorität: 24.06.1995 DE 19523022
(43) Veröffentlichungstag der Anmeldung: 17.06.1998
(73) Patentinhaber: Continental Teves AG & Co. oHG, 60488 Frankfurt (DE)
(72) Erfinder: KRÄMER, Horst, D-63128 Dietzenbach (DE); GONZALES, Jose, D-65510 Idstein (DE); VOGT, Michael, D-55469 Simmern (DE); DROTT, Peter, D-65936 Frankfurt am Main (DE); KLEY, Uwe, D-60433 Frankfurt am Main (DE)
(86) Internationale Anmeldenummer: EP9602355
(87) Internationale Veröffentlichungsnummer: WO9701471

(56) Entgegenhaltungen:
- WO-A-94/11226

## Beschreibung

Die Erfindung betrifft einen pneumatischen Bremskraftverstärker für Kraftfahrzeuge mit einem Verstärkergehäuse, dessen Innenraum durch eine bewegliche Wand in eine erste Kammer (Unterdruckkammer) und eine zweite Kammer (Arbeitskammer) unterteilt ist, sowie mit einem Steuergehäuse, in dem ein eine auf die bewegliche Wand einwirkende pneumatische Druckdifferenz steuerndes Steuerventil angeordnet ist, das mindestens zwei mit einem elastischen Ventilkörper zusammenwirkende Dichtsitze aufweist, und einerseits durch eine Betätigungsstange und andererseits unabhängig von der Betätigungsstange durch einen Elektromagneten betätigbar ist, dessen Anker kraftübertragend mit einem der Dichtsitze zusammenwirkt, wobei der Ventilkörper im Steuergehäuse einen pneumatischen Raum begrenzt, der über in der Dichtfläche des Ventilkörpers vorgesehenen Durchlässe mit dem in der zweiten Kammer herrschenden pneumatischen Druck beaufschlagbar ist.

Ein derartiger Bremskraftverstärker ist z.B. aus der internationalen Patentanmeldung WO 94/11226 bekannt. Weniger vorteilhaft anzusehen ist bei dem vorbekannten Bremskraftverstärker die Wirkung einer Ringfläche am Ventilkörper des Steuerventils, insbesondere beim Lösevorgang mit geschaltetem Elektromagneten, die einerseits von der radial äußeren Dichtlippe des Ventilkörpers und andererseits von dem an der Dichtfläche des Ventilkörpers anliegenden dritten Dichtsitz begrenzt ist. Die Ringfläche, die während des Betriebs des Bremskraftverstärkers mit dem in seinem Gehäuse herrschenden pneumatischen Differenzdruck beaufschlagt wird, bringt eine Kraftkomponente auf, die der vom Elektromagneten aufgebrachten Fremdbetätigungskraft entgegenwirkt und die durch eine entsprechende Auslegung einer den Ventilkolben des Steuerventils zurückziehenden Kolbenstangenrückholfeder kompensiert werden muß.

Es ist daher Aufgabe der vorliegenden Erfindung, Maßnahmen vorzuschlagen, durch die der störende Einfluß der erwähnten Kraftkomponenten eliminiert werden kann.

Diese Aufgabe wird erfindungsgemäß dadurch gelöst, daß die Durchlässe radial außerhalb des von dem elektromagnetisch betätigbaren Dichtsitz an der Dichtfläche des Ventilkörpers begrenzten Bereichs ausgebildet sind.

Der pneumatische Raum ist dabei vorzugsweise durch einen zylindrischen Fortsatz begrenzt, der am Gehäuse des Elektromagneten ausgebildet und im Steuergehäuse abgedichtet geführt ist.

Weitere vorteilhafte Ausgestaltungen der Erfindung sind den Unteransprüchen 2 bis 5 entnehmbar.

Die Erfindung wird in der nachfolgenden Beschreibung an einem Ausführungsbeispiel im Zusammenhang mit der beiliegenden Zeichnung näher erläutert.

In der Zeichnung zeigt:
- Fig. 1: eine Ausführung des erfindungsgemäßen Bremskraftverstärkers im Längsschnitt, teilweise weggebrochen, in der inaktiven Bereitschaftsstellung, und
- Fig. 2: das Steuerventil des in Fig. 1 gezeigten Bremskraftverstärkers mit eingeschaltetem Elektromagneten.

Das lediglich schematisch angedeutete Verstärkergehäuse 1 des in der Zeichnung dargestellten erfindungsgemäßen Unterdruckbremskraftverstärkers ist durch eine axial bewegliche Wand 2 in eine Arbeitskammer 3 und eine Unterdruckkammer 4 unterteilt. Die axial bewegliche Wand 2 besteht aus einem aus Blech tiefgezogenen Membranteller 8 und einer daran anliegenden flexiblen Membran 18, die nicht näher dargestellt zwischen dem äußeren Umfang des Membrantellers 8 und dem Verstärkergehäuse 1 eine Rollmembran als Abdichtung bildet.

Ein durch eine Betätigungsstange 7 betätigbares Steuerventil 12 ist in einem im Verstärkergehäuse 1 abgedichtet geführten, die bewegliche Wand 2 tragenden Steuergehäuse 5 untergebracht und besteht aus einem am Steuergehäuse 5 ausgebildeten ersten Dichtsitz 15, einem an einem mit der Betätigungsstange 7 verbundenen Ventilkolben 9 ausgebildeten zweiten Dichtsitz 16 sowie einem mit beiden Dichtsitzen 15,16 zusammenwirkenden, in einem im Steuergehäuse 5 abgedichtet angeordneten Führungsteil 21 geführten, ringförmigen Ventilkörper 10, der mittels einer sich am Führungsteil 21 abstützenden Ventilfeder 22 gegen die Ventilsitze 15,16 gedrückt wird. Die Arbeitskammer 3 ist mit der Unterdruckkammer 4 über einen seitlich im Steuergehäuse 5 verlaufenden Kanal 28 verbindbar.

Die Bremskraft wird über eine stirnseitig an einem Vorderteil 42 des Steuergehäuses 5 anliegende gummielastische Reaktionsscheibe 6 sowie eine einen Kopfflansch 23 aufweisende Druckstange 14 auf einen Betätigungskolben eines nicht dargestellten Hauptzylinders der Bremsanlage übertragen, der an der unterdruckseitigen Verstärkergehäusehälfte angebracht ist.

Eine in der Zeichnung schematisch dargestellte Rückstellfeder 26, die sich an der unterdruckseitigen Stirnwand des Ver-stärkergehäuses 1 abstützt, hält die bewegliche Wand 2 in der gezeigten Ausgangsstellung. Außerdem ist eine zweite Druckfeder bzw. Kolbenstangenrückholfeder 27 vorgesehen, die einerseits indirekt an der Betätigungsstange 7 und andererseits am Führungsteil 21 abgestützt ist und deren Kraft für eine Vorspannung des Ventilkolbens 9 bzw. seines Dichtsitzes 16 gegenüber dem Ventilkörper 10 sorgt.

Um die Arbeitskammer 3 bei der Betätigung des Steuerventils 12 mit der Atmosphäre verbinden zu können, ist schließlich im Steuergehäuse 5 ein annähernd radial verlaufender Kanal 29 ausgebildet. Die Rückkehrbewegung des Ventilkolbens 9 am Ende eines Bremsvorganges wird dabei durch ein Querglied 11 begrenzt, das in der in der Zeichnung gezeigten Lösestellung des Unterdruckbremskraftverstärkers an einem im Verstärkergehäuse 1 ausgebildeten Anschlag 38 anliegt.

Wie der Zeichnung weiter zu entnehmen ist, weist der Ventilkörper 10 eine mit den beiden Dichtsitzen 15,16 zusammenwirkende ringförmige Dichtfläche 44 auf, die mittels einer metallischen Versteifungsscheibe 45 versteift ist und mit mehreren axialen Durchlässen 19 versehen ist. Außerdem weist der Ventilkörper 10 eine radial innen ausgebildete Dichtlippe 13 sowie eine radial außen ausgebildete zweite Dichtlippe 41 auf, die im montierten Zustand des Ventilkörpers 10 im Steuergehäuse 5 an dem vorhin erwähnten, den Ventilkörper 10 führenden Führungsteil 21 dichtend anliegen, so daß im Steuergehäuse 5 ein pneumatischer Raum 17 begrenzt ist. Die durch die Durchlässe 19 und Öffnungen in der Dichtfläche 44 gebildeten, näher nicht bezeichneten Strömungskanäle verbinden den pneumatischen Raum 17 mit einem durch die Dichtsitze 15,16 begrenzten Ringraum 43, in dem der oben erwähnte pneumatische Kanal 29 mündet, so daß der auf der der Dichtfläche 44 abgewandten Seite des Ventilkörpers 10 ausgebildete pneumatische Raum 17 ständig mit der Arbeitskammer 3 in Verbindung steht und am Ventilkörper 10 ein Druckausgleich stattfindet.

Die beschriebene Anordnung ermöglicht demnach eine Verringerung der Differenz zwischen der Ansprechkraft des Bremskraftverstärkers und der am Ventilkolben wirkenden Rückstellkraft in dem Sinne, daß bei einer gleichbleibenden Ansprechkraft eine Erhöhung der Rückstellkraft oder bei einer gleichbleibenden Rückstellkraft eine Verringerung der Ansprechkraft möglich ist, wodurch eine Verbesserung der Hysterese des erfindungsgemäßen Bremskraftverstärkers erreicht wird.

Um eine von der Betätigungsstange 7 unabhängige Fremdbetätigung des erfindungsgemäßen Bremskraftverstärkers einzuleiten ist radial zwischen dem ersten (15) und dem zweiten Dichtsitz 16 ein dritter Dichtsitz 24 vorgesehen, der mittels eines Elektromagneten 20 betätigbar ist, der vorzugsweise in einem mit dem Ventilkolben 9 fest verbundenen Gehäuse 25 angeordnet ist und demnach zusammen mit dem Ventilkolben 9 im Steuergehäuse 5 verschiebbar ist. Der Elektromagnet 20 besteht aus einer innerhalb des Gehäuses 25 angeordneten Spule 46 sowie einem axial verschiebbar angeordneten zylindrischen Anker 31, der teilweise in einem das Gehäuse 25 verschließenden Verschlußteil 30 geführt wird und an dem sich eine Kraftübertragungshülse 32 abstützt, die den vorhin erwähnten dritten Dichtsitz 24 trägt. Zwischen dem Ventilkolben 9 und der Kraftübertragungshülse 32 ist eine Druckfeder 40 angeordnet, die den Anker 31 in seiner Ausgangslage hält, in der der dritte Dichtsitz 24 gegenüber dem am Ventilkolben 9 ausgebildeten zweiten Dichtsitz 16 axial versetzt angeordnet ist. Das im Steuergehäuse 5 geführte Verschlußteil 30 liegt unter Zwischenschaltung einer Übersetzungsscheibe 33 an der vorhin erwähnten Reaktionsscheibe 6 an und ermöglicht eine Übertragung der an der Betätigungsstange 7 eingeleiteten Eingangskraft auf die Reaktionsscheibe 6.

Die Anordnung bzw. Ausbildung der vorhin erwähnten Durchlässe 19 im Ventilkörper 10 des Steuerventils 12 ist daher vorzugsweise derart getroffen, daß deren Abstand von der Längsachse des Bremskraftverstärkers größer ist als der Radius des dritten Dichtsitzes 24, so daß die Durchlässe 19 beim Anliegen des dritten Dichtsitzes 24 an der Dichtfläche 44 radial außerhalb des vom Dichtsitz 24 an der Dichtfläche 44 begrenzten Bereichs liegen.

Bei der in der Zeichnung gezeigten Ausführung des erfindungsgemäßen Bremskraftverstärkers sind schließlich elektrische Schaltmittel 47, 48 vorgesehen, die insbesondere bei Bremsvorgängen wichtig sind, bei denen zusätzlich zur Fahrer-betätigung der Elektromagnet 20 angesteuert wird, um unabhängig vom Fahrerwillen eine Vollbremsung herbeizuführen (sog. Bremsassistentfunktion). Dabei ist von besonderer Bedeutung, daß die Schaltmittel 47, 48 bei jeder Bremsung betätigt werden. Gleichzeitig muß gewährleistet werden, daß der Elektromagnet 20 nach Beendigung des fremdkraftunterstützten Bremsvorganges sicher abgeschaltet wird. Die gezeigten Schaltmittel bestehen dabei aus einem vorzugsweise am Ventilkolben 9 bzw. dem Gehäuse 25 des Elektromagneten 20 befestigten, zwei Schaltstellungen aufweisenden Mikroschalter 47 sowie einem den Mikroschalter 47 durch eine translatorische Bewegung betätigenden Betätigungselement 48, das in einer im Steuergehäuse 5 vorgesehenen Bohrung abgedichtet geführt ist und mit einem verstärkergehäusefesten Anschlag zusammenwirkt, der das Bezugszeichen 49 trägt und beispielsweise durch einen radialen Kragen der hinteren Verstärkergehäushälfte gebildet sein kann. Zwischen dem Betätigungselement 48 und dem Steuergehäuse 5 ist eine Druckfeder 50 angeordnet, so daß das dem Mikroschalter 47 abgewandte Ende des Betätigungselements 48 unter einer Vorspannung am Anschlag 50 anliegt.

Die Funktion des hier beschriebenen bzw. dargestellten, fremdbetätigbaren Bremskraftverstärkers ist in der eingangs erwähnten internationalen Patentanmeldung genau beschrieben, so daß sie im vorliegenden Text nicht wiederholt zu werden braucht.

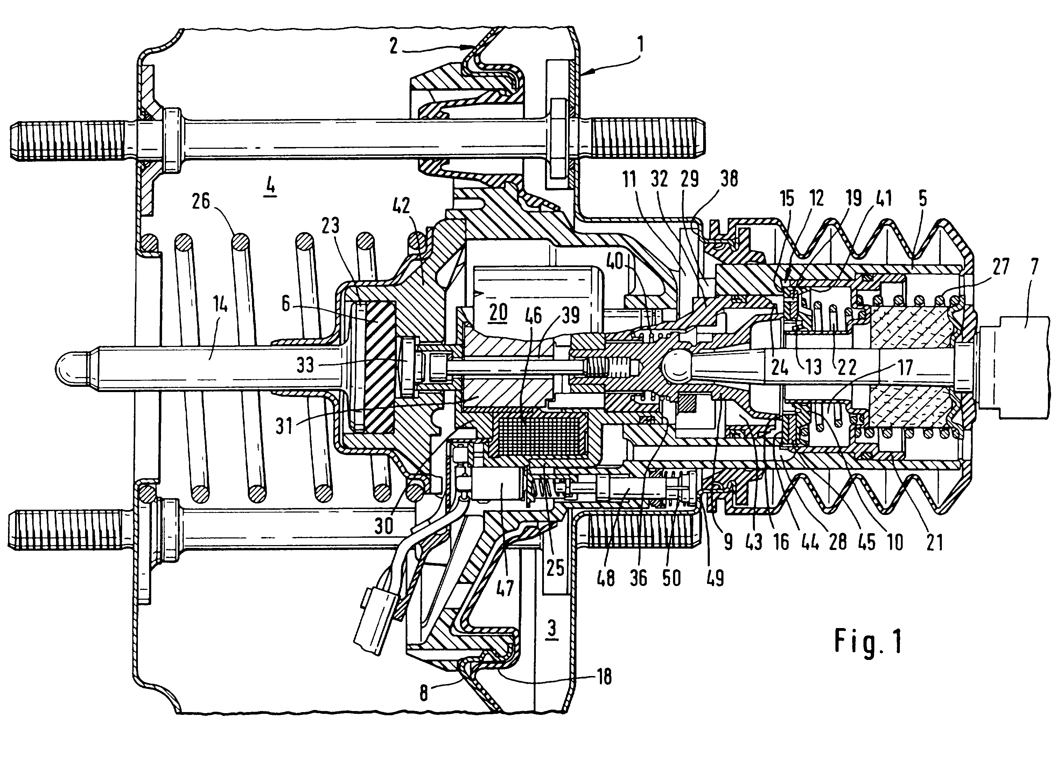

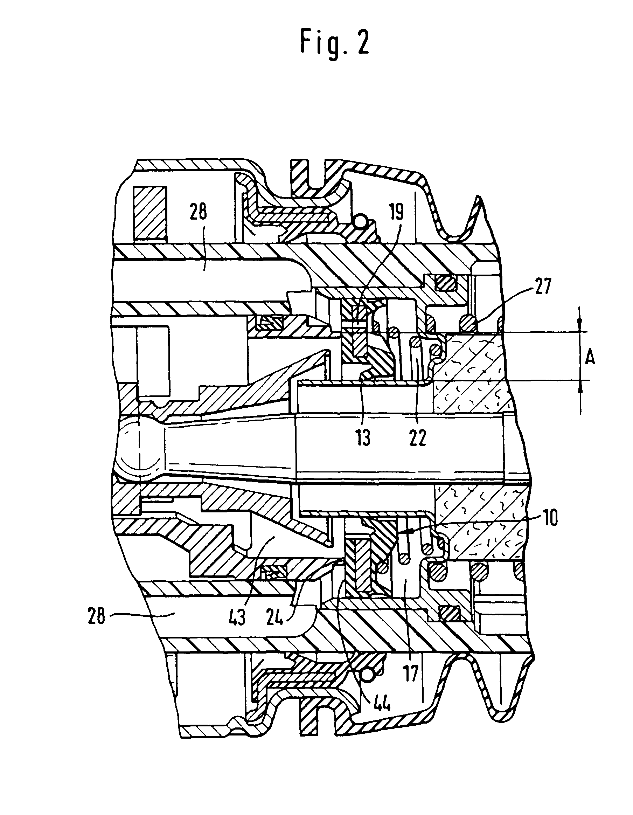

Wie insbesondere der Fig. 2 zu entnehmen ist, begrenzt der dritte Dichtsitz 24 während seiner Anlage an der Dichtfläche 44 des Ventilkörpers 10 zusammen mit seiner radial innenliegenden Dichtlippe 13 eine Rinfläche A, die während des in Fig. 2 gezeigten Fremdbetätigungszustandes des Steuerventils 12 der Wirkung des im Verstärkergehäuse 1 herrschenden pneumatischen Differenzdruckes ausgesetzt ist. Ursache hierfür sind die pneumatischen Kanäle bzw. Durchlässe 19 im Ventilkörper 10, die (über die im Zusammenhang mit Fig. 1 erwähnten Unterdruckkanäle 28) einen pneumatischen Druckausgleich zwischen der vorderen (Unterdruck-) Kammer 4 und dem im Halteteil 21 begrenzten pneumatischen Ringraum 17 ermöglichen. Im Raum 17 herrscht demnach ein Unterdruck, während im Raum 43 der Atmosphärendruck herrscht, so daß eine pneumatisch bedingte Kraftkomponente entsteht, die in der Betätigungsrichtung des dritten Dichtsitzes 29 bzw. des Elektromagneten wirkt und somit die Wirkung der Kolbenstangenrückholfeder 27 unterstützt.

## Patentansprüche

1. Pneumatischer Bremskraftverstärker für Kraftfahrzeuge mit einem Verstärkergehäuse, dessen Innenraum durch eine bewegliche Wand (2) in eine erste Kammer (4) (Unterdruckkammer) und eine zweite Kammer (3) (Arbeitskammer) unterteilt ist, sowie mit einem Steuergehäuse, in dem ein eine auf die bewegliche Wand einwirkende pneumatische Druckdifferenz steuerndes Steuerventil (12) angeordnet ist, das mindestens zwei mit einem elastischen Ventilkörper (10) zusammenwirkende Dichtsitze (15, 16) aufweist, und einerseits durch eine Betätigungsstange (7) und andererseits unabhängig von der Betätigungsstange durch einen Elektromagneten (20) betätigbar ist, dessen Anke (31) kraftübertragend mit einem der Dichtsitze zusammenwirkt, wobei der Ventilkörper (10) im Steuergehäuse einen pneumatischen Raum (43) begrenzt, der über in der Dichtfläche (44) des Ventilkörpers vorgesehene Durchlässe (19) mit dem in der zweiten Kammer (17) herrschenden pneumatischen Druck beaufschlagbar ist, dadurch **gekennzeichnet**, daß die Durchlässe (19) radial außerhalb des von dem elektromagnetisch betätigbaren Dichtsitz (24) an der Dichtfläche (44) des Ventilkörpers (10) begrenzten Bereichs ausgebildet sind.

2. Bremskraftverstärker nach Anspruch 1, dadurch **gekennzeichnet**, daß der durch den Anker (31) betätigbare Dichtsitz derjenige ist, dessen Öffnen ein Belüften der zweiten Kammer (Arbeitskammer) ermöglicht.

3. Bremskraftverstärker nach Anspruch 1, dadurch **gekennzeichnet**, daß der durch den Anker (31) betätigbare Dichtsitz ein zu den Dichtsitzen (15,16) konzentrisch angeordneter dritter Dichtsitz (24) ist, der bei einer Betätigung des Steuerventils (12) durch den Elektromagneten (20) den Dichtsitz (15) funktionsmäßig ersetzt, dessen Öffnen eine pneumatische Verbindung zwischen den beiden Kammern (3,4) ermöglicht.

4. Bremskraftverstärker nach Anspruch 3, dadurch **gekennzeichnet**, daß der dritte Dichtsitz (24) an einer durch den Anker (31) verschiebbaren, im Steuergehäuse (5) abgedichtet geführten Kraftübertragungshülse (32) ausgebildet ist.

5. Bremskraftverstärker nach einem der Ansprüche 1 bis 4, dadurch **gekennzeichnet**, daß der pneumatische Raum (17) in einem im Steuergehäuse (5) abgedichtet angeordneten Halteteil (21) ausgebildet ist, der sowohl seine radial innere als auch seine radial äußere Begrenzung bildet.

## Claims

1. Pneumatic brake power booster for automotive vehicles including a booster housing with an interior which is subdivided by a movable wall (2) into a first chamber (4) (vacuum chamber) and a second chamber (3) (working chamber), and a control housing accommodating a control valve (12) which controls a pneumatic pressure difference acting upon the movable wall, the control valve including at least two sealing seats (15, 16) that cooperate with an elastic valve member (10), and being operable by an actuating rod (7), on the one hand, and irrespective of the actuating rod by an electromagnet (20), on the other hand, the armature (31) of the electromagnet cooperating in a force-transmitting way with one of the sealing seats, and the valve member (10) confines a pneumatic chamber (43) in the control housing which can be acted upon by the pneumatic pressure prevailing in the second chamber (17) through passages (19) provided in the sealing surface (44) of the valve member,
**characterized** in that the passages (19) are provided radially outside the area which is limited by the electromagnetically operable sealing seat (24) on the sealing surface (44) of the valve member (10).

2. Brake power booster as claimed in claim 1,
**characterized** in that the sealing seat operable by the armature (31) is that sealing seat which, when opened, permits ventilation of the second chamber (working chamber).

3. Brake power booster as claimed in claim 1,
**characterized** in that the sealing seat operable by the armature (31) is a third sealing seat (24) which is arranged concentrically relative to the sealing seats (15, 16), and which, on actuation of the control valve (12) by the electromagnet (20), replaces the sealing seat (15) in terms of effect, opening of which permits a pneumatic connection between the two chambers (3, 4).

4. Brake power booster as claimed in claim 3,
**characterized** in that the third sealing seat (24) is provided on a force-transmitting sleeve (32) which is sealed in the control housing (5) and slidable by the armature (31).

5. Brake power booster as claimed in any one of claims 1 to 4,
**characterized** in that the pneumatic chamber (17) is provided in a retaining member (21) which is sealed in the control housing (5) and forms its radially inward and radially outward boundaries.

## Revendications

1. Amplificateur pneumatique d'effort de freinage pour véhicules automobiles, comprenant un vase d'amplificateur dont l'intérieur est divisé, par une paroi mobile (2), en une première chambre (4) (chambre à dépression) et une seconde chambre (3) (chambre de travail), ainsi qu'un boîtier de commande, dans lequel est disposée une soupape de commande (12) pilotant une différence de pression pneumatique agissant sur la paroi mobile, qui comporte au moins deux sièges d'étanchéité (15, 16) coopérant avec un corps de soupape élastique (10), et qui peut être actionnée d'une part au moyen d'une tige d'actionnement (7), et d'autre part, indépendamment de la tige d'actionnement, au moyen d'un électro-aimant (20) dont l'induit (31) coopère, par transmission des forces, avec l'un des sièges d'étanchéité, le corps de soupape (10) délimitant dans le boîtier de commande un espace pneumatique (43) qui peut être soumis à la pression pneumatique régnant dans la seconde chambre (17), par l'intermédiaire de passages (19) prévus dans la surface d'étanchéité (44) du corps de soupape,
caractérisé en ce que les passages (19) sont formés radialement à l'extérieur de la zone délimitée par le siège d'étanchéité (24) à commande électromagnétique sur la surface d'étanchéité (44) du corps de soupape (10).

2. Amplificateur d'effort de freinage selon la revendication 1, caractérisé en ce que le siège d'étanchéité pouvant être actionné par l'induit (31) est celui dont l'ouverture permet une ventilation de la deuxième chambre (chambre de travail).

3. Amplificateur d'effort de freinage selon la revendication 1, caractérisé en ce que le siège d'étanchéité pouvant être actionné par l'induit (31) est un troisième siège d'étanchéité (24) disposé concentriquement aux sièges d'étanchéité (15, 16), qui, lorsque la soupape de commande (12) est actionnée par l'électro-aimant (20), remplace fonctionnellement le siège d'étanchéité (15), dont l'ouverture permet d'établir une communication pneumatique entre les deux chambres (3, 4).

4. Amplificateur d'effort de freinage selon la revendication 3, caractérisé en ce que le troisième siège d'étanchéité (24) est formé sur une douille de transmission des forces (32) pouvant être déplacée par l'induit (31) et guidée de façon étanche dans le boîtier de commande (5).

5. Amplificateur d'effort de freinage selon l'une des revendications 1 à 4, caractérisé en ce que l'espace pneumatique (17) est aménagé dans un élément de maintien (21) disposé de façon étanche dans le boîtier de commande (5), cet élément définissant à la fois sa limite radialement intérieure et sa limite radialement extérieure.
